# EUROPÄISCHE PATENTSCHRIFT

(11) **EP 3 089 351 B1**
(45) Veröffentlichungstag und Bekanntmachung des Hinweises auf die Patenterteilung: **10.11.2021**
(21) Anmeldenummer: 16000903.1
(22) Anmeldetag: 21.04.2016
(51) Int. Cl.: H02P 6/18, H02P 25/022, H02P 21/24, H02P 25/024

(54) **VERFAHREN ZUR BESTIMMUNG DER POSITION EINES ROTORS EINES PERMANENTMAGNETSERVOMOTORS**
METHOD FOR DETERMINING THE POSITION OF A ROTOR OF A PERMANENTLY MAGNETIC SERVO MOTOR
PROCEDE DE DETERMINATION DE LA POSITION D'UN ROTOR D'UN SERVOMOTEUR A AIMANT PERMANENT

(30) Priorität: 28.04.2015 DE 102015005478
(43) Veröffentlichungstag der Anmeldung: 02.11.2016
(73) Patentinhaber: Stöber Antriebstechnik GmbH & Co. KG, 75177 Pforzheim (DE)
(72) Erfinder: Bäzner, Heinz, 75331 Engelsbrand (DE); Kraus, Benjamin, 75249 Kieselbronn (DE); Scholze, Stephan, 75239 Eisingen (DE); Blasofszky, Gerhard, 75173 Pforzheim (DE)
(74) Vertreter: Jackisch-Kohl, Anna-Katharina

(56) Entgegenhaltungen:
- EP-A2- 1 526 635
- DE-A1-102007 057 499
- US-A- 6 051 946
- US-A1- 2010 171 455
- US-A1- 2014 327 379
- None

## Beschreibung

Die Erfindung bezieht sich auf ein Verfahren zur Bestimmung der Position eines Rotors eines Permanentmagnetservomotors nach dem Oberbegriff des Anspruches 1.

Ein solches Verfahren ist aus US 6 051 946 A bekannt.

Es ist weiter bekannt (US 2014/327379 A1), eine Sättigung des Rotors einmal gegen und einmal in Richtung des Rotormagnetfeldes vorzunehmen. Aus DE 10 2007 057 499 A1 ist es bekannt, die Drehposition eines Rotors unter Verwendung von Informationen zu erfassen, die in Datentabellen gespeichert sind.

Um die Position eines Rotors eines Elektromotors zu bestimmen, werden Positions-Encoder eingesetzt. Sie werden mittels eines Encoder-Kabels an einen Mikrocontroller angeschlossen. Die Positions-Encoder sind teure Bauteile, die den entsprechenden Antrieb verteuern. Die Auswerteelektronik solcher Encoder sowie die Verkabelung sind darüber hinaus im Einsatz empfindlich und störanfällig.

Der Erfindung liegt die Aufgabe zugrunde, das gattungsgemäße Verfahren so auszubilden, dass bei kostengünstiger Ausbildung eine zuverlässige Lagebestimmung des Rotors erreicht wird.

Diese Aufgabe wird beim gattungsgemäßen Verfahren erfindungsgemäß mit den kennzeichnenden Merkmalen des Anspruches 1 gelöst.

Der Servoantrieb zeichnet sich dadurch aus, dass für die Lagebestimmung des Rotors ein Positions-Encoder nicht mehr erforderlich ist. Es wird in bestimmten Betriebszuständen das Strom-Testsignal injiziert. Über den sich dann einstellenden gemessenen Strom kann die Rotorposition einfach und dennoch genau bestimmt werden. Die Rotorposition kann sowohl für die Kommutierung als auch für eine Geschwindigkeits- und Positionsregelung verwendet werden.

Vorteilhaft wird das Strom-Testsignal über das Stellglied zugeführt, das bevorzugt eine Leistungselektronik des Servoantriebes ist.

Der Motor ist ein Permanentmagnetsynchronmotor.

Beim Servoantrieb wird anhand des dem nach dem Injizieren des Testsignales sich ergebenden Stromes zugehörigen Zeigerdiagramms der Stromraumzeiger ermittelt. Anhand der Winkellage des Stromraumzeigers kann die Position des Rotors einwandfrei festgestellt werden. Tritt ein Positionsfehler auf, wird das Statorfeld dem sich drehenden Rotor nachgeführt.

Beim erfindungsgemäßen Verfahren erfolgt eine Korrektur des sättigungsbedingten Positionsfehlers. Beim Permanentmagnetsynchronmotor wird die Nord-Süd-Richtung berücksichtigt. Infolge der Permanentmagnete hat der Rotor einen charakteristischen Verlauf der Induktivität. Der Motor wird zunächst stromgeregelt in Sättigung gebracht. Der (Dem) sich ergebenden Spannung bzw. Strom wird ein definierter Strom/Spannungsverlauf überlagert. Dies führt zu einer Änderung der Induktivität, woraus die aktuelle Ausrichtung des Rotors ermittelt werden kann. Beim erfindungsgemäßen Verfahren wird der Sättigungseffekt ausgenutzt, um eine vorhandene Nord-Süd-Redundanz des Permanentmagnetsynchronmotors zu eliminieren. Der geometrische Verlauf der Induktivität beim Permanentmagnetsynchronmotor ist abhängig von der Bestromung des Motors, insbesondere bei Sättigung des Rotors. Die Sättigung kann als Verschiebung um die Rotationsachse des Rotors beschrieben werden.

Der geometrische Verlauf der Induktivität bei Bestromung des Motors wird erfasst und mit gespeicherten Werten verglichen. Der Permanentmagnetsynchronmotor wird vorher ausgemessen und die mögliche Verschiebung der Position des Rotors festgehalten. Anhand dieser gespeicherten Werte kann dann eine gemessene Verschiebung der Rotorposition sehr einfach kompensiert werden.

Ein Positionsfehler des Rotors, der durch Bestromen des Rotors hervorgerufen wird, wird in der Folge kompensiert.

Die gespeicherten Werte enthalten die Positionsfehler des Rotors und die zur Kompensation dieses Positionsfehlers erforderlichen Stromwerte, vorzugsweise in Tabellenform. Dadurch kann die Kompensation des Positionsfehlers sehr einfach und genau durchgeführt werden.

Der Rotor wird einmal gegen und einmal in Richtung des Rotormagnetfeldes stromgeregelt in Sättigung gebracht. Mit einer solchen Vorgehensweise kann die Nord-Süd-Redundanz sicher eliminiert werden.

Eine exakte und einfache Bestimmung des Positionsfehlers ergibt sich, wenn er als Verschiebung der Position um die Drehachse des Rotors bestimmt wird.

Der Rotor ist so ausgeformt, dass sowohl Reluktanzmomente als auch aus dem EMK-Prinzip herrührende Momente ermöglicht werden. Die Flusssperren minimieren die Rotorverluste und erhöhen den Wirkungsgrad. Erreicht wird dies dadurch, dass die Flusssperren an die Aussparungen für die Permanentmagnete anschließen. Die Flusssperren sind Ausstanzungen in den einzelnen Lamellen des Blechpaketes.

Vorteilhaft münden die Flusssperren in die Aussparungen für die Permanentmagnete. Diese Ausbildung ermöglicht auch ein einfaches Stanzen der Lamellen.

Die Aussparungen haben bei einer einfachen Ausführungsform vorteilhaft rechteckigen Umriss.

Bevorzugt schließen die Flusssperren an die Stirnseiten der rechteckigen Aussparungen an.

Ein Flussverlust wird zuverlässig in vorteilhafter Form dann verhindert, wenn sich die Flusssperren in Richtung auf den äußeren Mantel des Blechpaketes erstrecken.

Um die Anisotropie des Blechpaketes zu verstärken, weist das Blechpaket in vorteilhafter Ausbildung randseitige Nuten auf, die im Bereich zwischen benachbarten Aussparungen liegen.

Diese Nuten erstrecken sich vorteilhaft bis zwischen die Flusssperren benachbarter Aussparungen. Dadurch wirken die Nuten mit den Flusssperren so zusammen, dass Flussverluste sicher verhindert werden und die Feldlinien im Einsatz des Rotors zuverlässig durch den Luftspalt zwischen dem Rotor und dem Stator verlaufen.

Vorteilhaft verjüngen sich die Nuten vom äußeren Mantel des Blechpaketes aus nach innen.

Die Erfindung wird anhand eines in den Zeichnungen dargestellten Ausführungsbeispieles näher erläutert. Es zeigen
- Fig. 1: in einem Schaltbild einen Servoantrieb nach dem Stand der Technik,
- Fig. 2: ein Schaltbild eines Servoantriebes ohne Encoder,
- Fig. 3: in schematischer Darstellung den Rotor einer Synchron-Reluktanzmaschine und der zugehörige anisotropische Induktivi-tätsverlauf,
- Fig. 4: in einer Darstellung entsprechend Fig. 3 den Rotor eines Permanentmagnetsynchronmotors und zugehörigem anisotropischen Induktivitätsverlauf,
- Fig. 5 und Fig. 6: in schematischer Darstellung den Rotor eines Permanentmagnetsynchronmotors mit Statorspulen, dem ein Testsignal zugeführt wird sowie den hieraus sich ergebenden Stromraumzeiger,

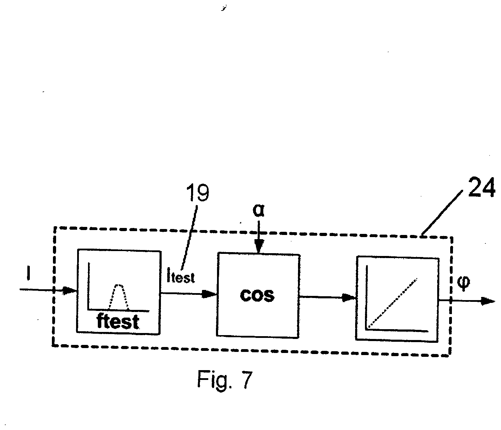

- Fig. 7: in einem Schaltbild eine Einrichtung zur Nachführung des Statorfeldes an die Rotorlage,
- Fig. 8: in schematischer Darstellung die Vorgehensweise bei einer Eliminierung einer Nord-Süd-Redundanz eines Permanentmagnetsynchronmotors,
- Fig. 9: in schematischer Darstellung die Korrektur eines sättigungsbedingten Positionsfehlers bei einem Permanentmagnetsynchronmotor,
- Fig. 10: einen Schnitt durch einen Rotor eines Permanentmagnetsynchronmotors.

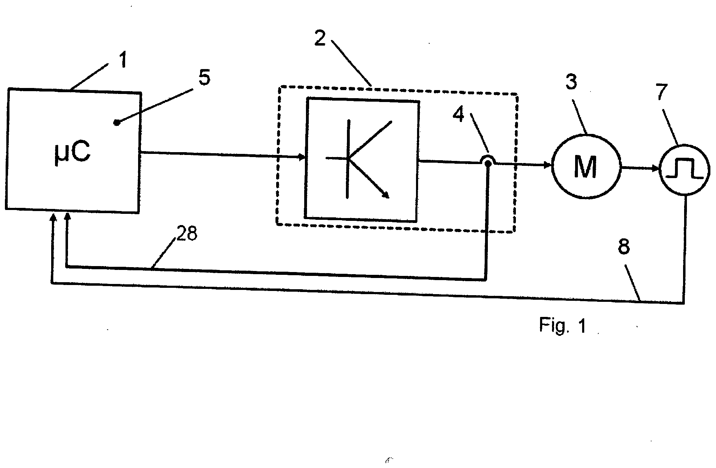

Fig. 1 zeigt das Schaltbild eines herkömmlichen Servoantriebes. Er hat einen Mikrocontroller 1, der an ein Stellglied 2 angeschlossen ist. Die Signale des Stellgliedes 2, das eine Leistungselektronik ist, werden dem Motor 3 zugeführt. Ein Stromsensor 4 erfasst die dem Motor 3 zugeführten Stromsignale. Die Position des Rotors des Motors 3 wird durch einen Positionsencoder 7 erfasst, dessen Signale über ein Encoderkabel 8 dem Mikrocontroller 1 zugeführt werden. Auch die Signale des Stromsensors 4 werden über eine Leitung 28 dem Mikrocontroller 1 zugeführt. Über einen Algorithmus 5 des Mikrocontrollers 1 werden die über die Kabel 8, 28 zugeführten Signale ausgewertet und bei Bedarf entsprechende Korrektursignale über das Stellglied 2 dem Motor 3 zugeführt.

Mit dem Servoantrieb werden Bewegungen von Maschinenachsen gesteuert bzw. geregelt. Mit dem Positionsencoder 7 werden die Bewegungen der Maschinenachse erfasst. Diese Bewegungen können Drehbewegungen der Maschinenachse sein. Solche Maschinen werden beispielsweise zum Drahtwickeln, Drahtrichten und dergleichen eingesetzt. Die Maschinenachsen können aber auch Schwenkbewegungen oder Verschiebebewegungen ausführen. Verschiebebewegungen treten beispielsweise bei Schiebern in Verpackungsmaschinen oder bei Hubwerken auf.

Die Verwendung der Encoder 7 ist kostenaufwändig. Auch die Auswerteelektronik 2 und die Verkabelung in Form des Encoderkabels 8 führt zu erheblichen Kosten. Die Positionsencoder 7 sind im Einsatz sehr empfindlich, und ihre Zuverlässigkeit ist je nach Einsatzfall des Servoantriebes eingeschränkt. Darüber hinaus erhöhen die Encoder 7 das Bauvolumen des Servoantriebes.

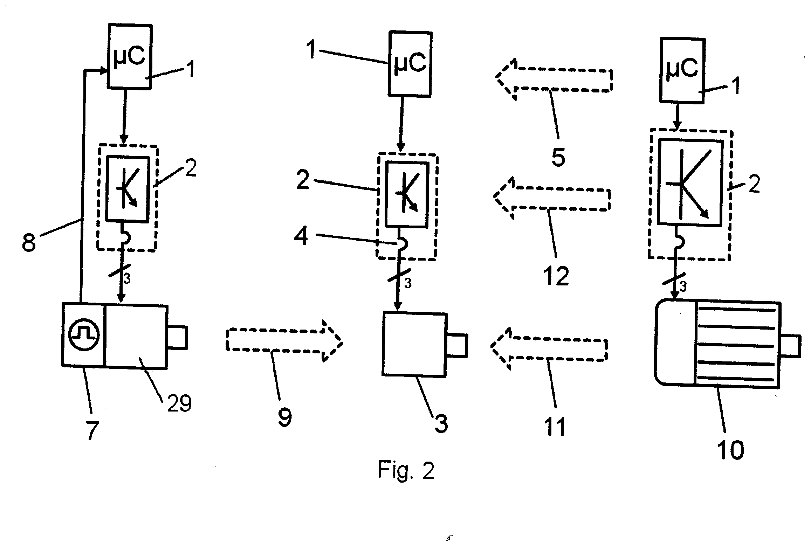

Fig. 2 zeigt in der rechten und linken Darstellung zwei bekannte Servoantriebe. Mit dem linken Servoantrieb wird ein Motor 29 angetrieben, der mit dem Positionsencoder 7 versehen ist. Seine Signale werden über das Encoderkabel 8 in der beschriebenen Weise dem Mikrocontroller 1 zugeführt, dessen Signale dem Stellglied 2 zugeführt werden.

Mit dem in Fig. 2 rechten Servoantrieb wird eine Synchron-Reluktanzmaschine 10 betrieben. Sie ist an das Stellglied 2 angeschlossen, das seinerseits mit dem Mikrocontroller 1 verbunden ist. Für die Synchron-Reluktanzmaschine 10 ist eine verhältnismäßig große Leistungselektronik 2 erforderlich. Auch die Synchron-Reluktanzmaschine 10 selbst hat ein großes Volumen.

Die mittlere Darstellung in Fig. 2 zeigt das Schaltbild eines Servoantriebes mit einem Permanentmagnetsynchronmotor 3. Der Servoantrieb hat den Mikrocontroller 1, der an das Stellglied 2 in Form der Leistungselektronik angeschlossen ist. Mit ihr wird der Motor 3 betrieben. Der Stromsensor 4 erfasst den vom Stellglied 2 an den Motor 3 gelieferten Strom. Im Ausführungsbeispiel ist der Motor 3 ein Permanentmagnetsynchronmotor.

Ein Vergleich dieses mittleren Servoantriebes mit den beiden bekannten Servoantrieben zeigt Folgendes. Im Vergleich zum Servoantrieb gemäß der linken Abbildung zeichnet sich der erfindungsgemäße Servoantrieb dadurch aus, dass er kein Encoderkabel 8 und keinen Encoder 7 aufweist. Dies ist durch den gestrichelten Pfeil 9 in Fig. 2 kenntlich gemacht.

Im Vergleich zu dem in Fig. 2 rechten Servoantrieb ist beim mittleren Servoantrieb ein Algorithmus im Mikrocontroller 1 nicht erforderlich, was durch den gestrichelten Pfeil 5 angedeutet ist. Da der Motor 3 ein Permanentmagnetsynchronmotor ist, baut er wesentlich kleiner als die Synchron-Reluktanzmaschine 10 (Pfeil 11). Der Permanentmagnetsynchronmotor 3 benötigt darüber hinaus eine wesentlich kleinere Leistungselektronik 2 (Pfeil 12). Somit zeichnet sich der Servoantrieb durch eine kompakte Ausbildung aus, die zudem kostengünstig in der Anschaffung ist.

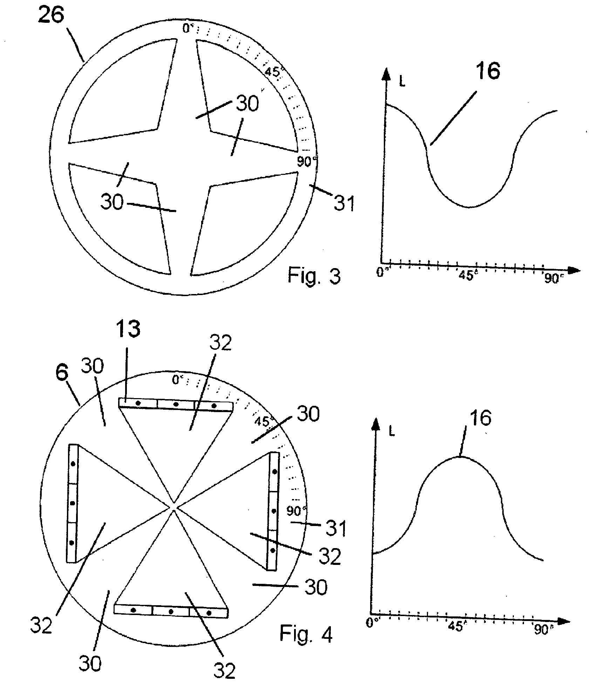

Anhand von Fig. 3 wird eine Synchron-Reluktanzmaschine beschrieben, von der der Rotor 26 dargestellt ist. Der zugehörige Induktionsverlauf über den Winkel ϕ von 0° bis 90° ist im entsprechenden Diagramm dargestellt. Der Rotor 24 hat vier Rotorarme 30, die von einem zentralen Bereich ausgehen und am äußeren Ende durch einen Ring 31 miteinander verbunden sind. Die Arme 30 haben jeweils einen Winkelabstand von 90° voneinander. Das Induktivitäts-Winkel-Diagramm zeigt, dass die Induktivität L im Bereich der Rotorarme 30 (0° und 90°) am größten und im Bereich zwischen ihnen bei 45° am geringsten ist.

Fig. 4 zeigt die Verhältnisse bei einem Permanentmagnetsynchronmotor, von dem der Rotor 6 dargestellt ist. Der Rotor 6 hat die Arme 30, die in Winkelabständen von 90° zueinander angeordnet und am äußeren Rand durch den Ring 31 miteinander verbunden sind. Die Arme 30 liegen im dargestellten Ausführungsbeispiel bei einem Winkel ϕ von 45°, 135°, 225°, 315°.

Zwischen den Armen 30 befinden sich Aussparungen 30, in denen Permanentmagnete 13 angeordnet sind. Beispielhaft sind in jeder Aussparung 32 drei nebeneinander liegende Permanentmagnete 13 angeordnet. Sie sind jeweils in einer Reihe nebeneinander angeordnet, wobei Nord- und Südpole in bekannter Weise abwechselnd vorgesehen sind. Wie das zugehörige Induktivitäts-Winkel-Diagramm zeigt, hat die Induktivität L im Bereich der Aussparungen 32 den geringsten und im Bereich der Arme 30 den höchsten Wert. Im Ausführungsbeispiel, bei dem der Winkelbereich von 0° bis 90° betrachtet wird, hat die Induktivitätskurve 16 somit bei 45° den höchsten und bei 0° und 90° den geringsten Wert.

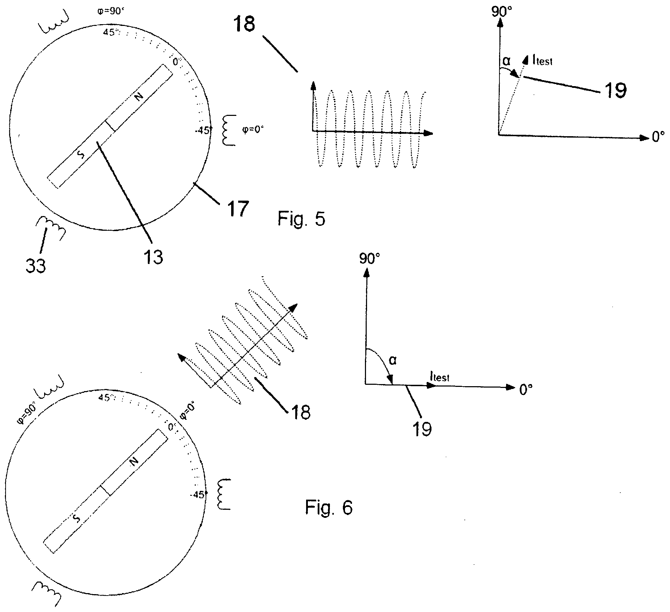

Um die Rotorposition des Motors zu bestimmen, wird in bestimmten Betriebszuständen über die Leistungselektronik 2 eine Testfrequenz 18 injiziert (Fig. 5 und 6). Über den sich dann einstellenden gemessenen Strom wird die Rotorposition bestimmt. Diese Position wird sowohl für die Kommutierung als auch für die Geschwindigkeits- und Positionsregelung verwendet. Der Mikrocontroller 1 ist in der Lage, ohne einen Positionsencoder, wie er bei den bekannten Servoantrieben eingesetzt wird, nur mit der Strommessung eine feldorientierte Regelung in allen Last- und Drehzahlzuständen zu betreiben.

Anhand der Fig. 5 und 6 werden unterschiedliche Ausrichtungen des Statorfeldes zum Rotor 17 beispielhaft beschrieben. Das Testsignal 18, das bevorzugt in einem Frequenzbereich von etwa 200 bis 400 Hz liegt, wird im Falle der Fig. 5 bei einem Positionswinkel ϕ von -45° injiziert, bezogen auf die Winkellage der Permanentmagnete 13. Das zugehörige Zeigerdiagramm zeigt den Strom Itest in Form des Stromraumzeigers 19. Der Winkel α zeigt an, dass die mittels des Testsignales 18 erfasste Ist-Position 0° von der Soll-Position 0° abweicht. Dementsprechend wird in noch zu beschreibender Weise der Servoantrieb so nachgeregelt, dass die Ist-Position der Soll-Position entspricht.

In Fig. 6 ist beispielhaft dargestellt, dass das Testsignal 18 in der Position 0° injiziert wird. Das zugehörige Zeigerdiagramm zeigt, dass der Stromraumzeiger Itest in 0°-Richtung liegt, d. h., dass die gemessene Ist-Position 0° der Soll-Position 0° entspricht. Das Fehlersignal ist somit 0.

Tritt, wie anhand von Fig. 5 beispielhaft beschrieben, das Fehlersignal auf, dann muss mit Hilfe des Motorstroms eine Positionskorrektur vorgenommen werden, damit die Ist-Position mit der Soll-Position übereinstimmt.

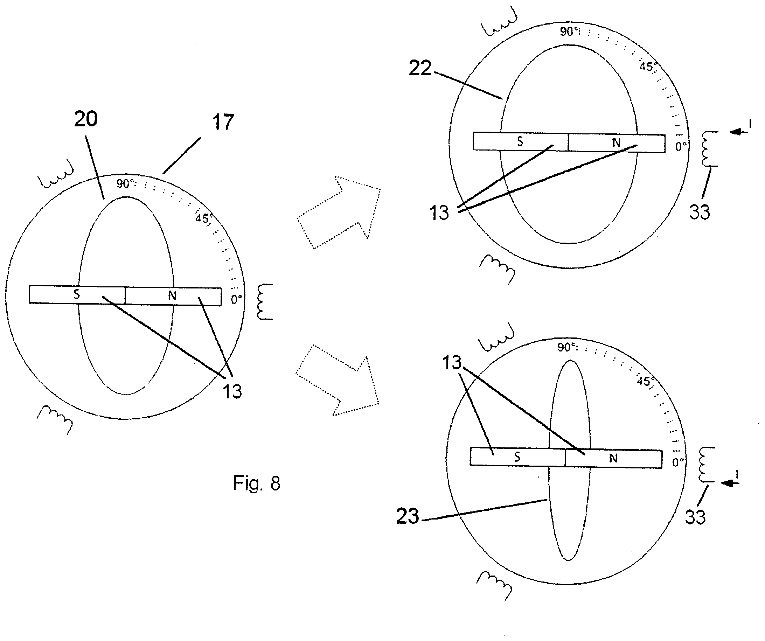

Bei einem Permanentmagnetsynchronmotor kommt es darauf an, dass die Nord-Süd-Richtung bei der Messung berücksichtigt wird. Ausgangspunkt ist, wie anhand der Fig. 5 und 6 beschrieben, der Rotor 17, der infolge der Permanentmagnete 13 einen charakteristischen Induktivitätsverlauf 20 aufweist (Fig. 8).

In Fig. 8 ist in der linken Abbildung beispielhaft der Induktivitätsverlauf 20 des Rotors 17 des Permanentmagnetsynchronmotors dargestellt. In einem ersten Schritt wird dieser Permanentmagnetsynchronmotor stromgeregelt in die Sättigung gebracht, und zwar einmal gegen das Rotormagnetfeld 22 und einmal in Richtung des Rotormagnetfeldes 23. Diese unterschiedliche Stromzuführung an den Statorspulen 33 ist durch den entsprechenden Pfeil I gekennzeichnet. In der rechten Darstellung der Fig. 8 sind diese bei der Sättigungsbestromung sich ergebenden Induktionsverläufe 22, 23 beispielhaft dargestellt.

In einem zweiten Schritt wird der sich ergebenden Spannung jeweils ein definierter Spannungsverlauf überlagert, wie anhand von Fig. 5 und 6 erläutert worden ist. Aus dem gemessenen Strom kann hierbei die Veränderung der Induktivität L und damit die aktuelle Ausrichtung des Rotors 17 ermittelt werden.

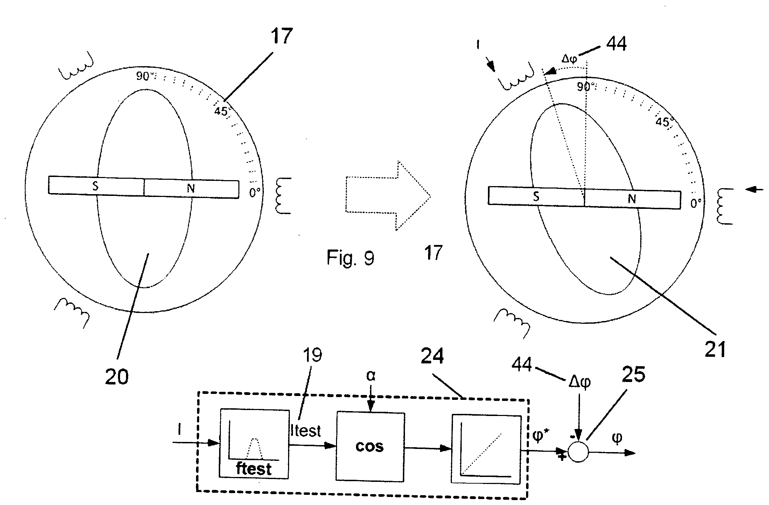

Anhand von Fig. 9 wird beschrieben, wie eine Nord-Süd-Redundanz des Rotors 17 des Permanentmagnetsynchronmotors durch entsprechende Korrektur eliminiert werden kann. Fig. 9 zeigt in der linken Abbildung den Rotor 17 mit dem Induktivitätsverlauf 20, der sich ergibt, wenn der Motor nicht bestromt ist. Wird er bestromt, dann verändert sich der Induktivitätsverlauf 21, wie die rechte Darstellung der Fig. 9 zeigt. Der Unterschied zwischen den beiden Induktionsverläufen 20 ist mit Δϕ bezeichnet. Der geometrische Induktivitätsverlauf des Permanentmagnetsynchronmotors ist abhängig von der Bestromung des Motors, insbesondere bei Sättigung des Rotors 17. Der Positionsfehler lässt sich als Verschiebung um die Rotationsachse des Rotors 17 beschreiben.

Der Permanentmagnetsynchronmotor wird vorher ausgemessen und hierbei eine Tabelle ermittelt, die diese Verschiebung Δϕ beschreibt. Diese Tabelle wird im Mikrocontroller 1 abgelegt. Bei der Kompensation des sättigungsbedingten Positionsfehlers Δϕ wird auf diese Tabelle zurückgegriffen, die für jeden Permanentmagnetsynchronmotor gesondert ermittelt und im Mikrocontroller gespeichert.

Um diese Korrektur des sättigungsbedingten Positionsfehlers Δϕ durchführen zu können, ist eine Einrichtung 24 vorgesehen. Mit ihr wird das Statorfeld dem sich drehenden Rotor 17 nachgeführt, um die Verschiebung Δϕ zu beseitigen. Hierzu wird das Testsignal 18 in der beschriebenen Weise injiziert und über den sich einstellenden gemessenen Strom die Lage des Stromraumzeigers 19 ermittelt. Er wird bei der beschriebenen Sättigungsbestromung berücksichtigt. Die Einrichtung 24 sendet ein Signal ϕ* aus, das sich aufgrund des injizierten Testsignales 18 ergibt und die augenblickliche Position des Rotors 17 anzeigt. Dieses Signal kennzeichnet den beschriebenen Positionsfehler Δϕ, der durch entsprechende Sättigungsbestromung ausgeglichen wird. Hierbei werden die in Tabellenform im Mikrocontoller abgespeicherten Vergleichswerte herangezogen. Durch die Sättigungskompensation wird der Positionsfehler Δϕ aufgehoben, was in der unteren Abbildung der Fig. 9 mit ϕ gekennzeichnet ist. Vorteilhaft erfolgt die Positionskompensation mittels einer Regelung.

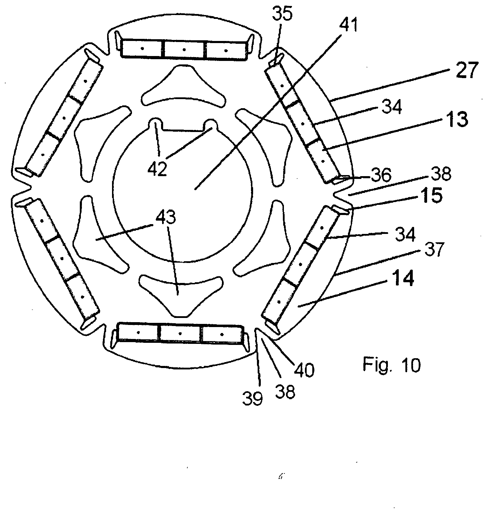

Damit der Permanentmagnetsynchronmotor zuverlässig geregelt werden kann, hat der Rotor 17 eine besondere Gestaltung, die anhand von Fig. 10 näher beschrieben wird. Diese Gestaltung ist im Hinblick darauf gewählt, dass sich bei einem hohen Strom die Induktivitäts-Winkel-Kurve (Fig. 3 und 4) einer Geraden nähert. Dann ist eine Regelung des Motors nur schwierig zu erreichen. Die nachfolgend beschriebene Gestaltung des Rotors 17 stellt sicher, dass auch bei den hohen Strömen sich ein Kurvenverlauf der Induktivität 16 ergibt, wie er in den Fig. 3 und 4 dargestellt ist.

Durch die Rotorgestaltung ergibt sich ein hoher Wirkungsgrad. Außerdem erfolgt eine maximale Ausnutzung des Reluktanzmomentes, was zu einem optimalen Drehmoment beiträgt.

Der Rotor 17 wird durch ein Blechpaket 14 gebildet, das aus aufeinander liegenden Blechlamellen besteht, die in geeigneter Weise fest miteinander verbunden sind. Das Blechpaket 14 hat über den Umfang verteilt Aussparungen 34, die sich über die Höhe des Blechpaketes 14 erstrecken und vorteilhaft gleich ausgebildet sind. Die Aussparungen 34 nehmen die Permanentmagnete 13 auf. In jeder Aussparung 34 befinden sich drei nebeneinander liegende Permanentmagnete 13. Im Ausführungsbeispiel sind über den Umfang des Rotors 17 gleichmäßig verteilt sechs Aussparungen 34 und dementsprechend sechs Permanentmagnetpakete 13 angeordnet, die nach Art von Sekanten angeordnet sind. Die einzelnen Permanentmagnete 13 sind jeweils gleich ausgebildet und haben vorzugsweise Rechteckform. Innerhalb der Aussparung 34 liegen die Permanentmagnete 13 mit ihren Stirnseiten aneinander und mit ihren Längsseiten an den Seitenwänden der Aussparung 34. Die Permanentmagnete 13 innerhalb der Aussparung 34 sind gleichartige Permanentmagnete, wobei innerhalb der Aussparung 34 gleichpolige Permanentmagnete 13 angeordnet sind. Über den Umfang des Blechpaketes 14 wechseln die Pole der Permanentmagnete 13 ab.

An die Stirnseiten 35, 36 der Aussparungen 34 schließen als Flusssperren dienende Aussparungen 15 an. Sie sind so im Blechpaket 14 angeordnet, dass sie die Rotorverluste minimieren und auf diese Weise zu einem sehr hohen Wirkungsgrad des Rotors 17 beitragen.

Die Aussparungen 15 erstrecken sich von den Stirnseiten 35, 36 aus in Richtung auf den äußeren Rand 37 des Blechpaketes 14 und enden mit geringem Abstand vom Rand 37. Die Aussparungen 15 sind wesentlich kleiner als die Aussparungen 34 und haben gerade Außenränder 44, die sich mit geringem Abstand zu den Stirnseiten 35, 36 der Aussparungen 34 erstrecken, sich über die dem Mantel 37 des Blechpaketes 14 benachbarte Längsseite der Aussparungen 34 erstrecken und mit geringem Abstand vom Blechpaketmantel 37 enden.

Das Blechpaket 14 ist im Bereich zwischen benachbarten Aussparungen 34 mit jeweils einer Nut 38 versehen, die sich über die Höhe des Blechpaketes 14 erstreckt. Die Nuten 38 sind gleich ausgebildet und münden in den äußeren Mantel des Blechpaketes 14. Radial nach innen nimmt ihre Breite stetig ab. Die Seitenwände 39, 40 der Nuten 38 gehen vorzugsweise bogenförmig ineinander über. Die Nuten 38 haben somit, in Achsrichtung des Blechpaketes 14 gesehen, V-Form. Die Nuten 38 liegen jeweils zwischen zwei Aussparungen 15 benachbarter Aussparungen 34.

Die Nuten 38 dienen vorteilhaft zur Verstärkung der magnetischen Anisotropie des Blechpaketes 14.

Das Blechpaket 14 hat eine zentrale Öffnung 41, in die eine (nicht dargestellte) Rotorwelle ragt. Am Umfang der Öffnung 41 sind beispielhaft zwei Formschlusselemente 42 vorgesehen, in die entsprechende Gegenformschlusselemente der Rotorwelle eingreifen und so eine einfache und zuverlässige drehfeste Verbindung zwischen dem Rotor 17 und der Rotorwelle herstellen.

Im Bereich zwischen der Öffnung 41 und den Aussparungen 34 ist das Blechpaket mit weiteren Aussparungen 43 versehen, die so angeordnet und ausgebildet sind, dass sie den Magnetfluss nicht beeinträchtigen und zu einer erheblichen Gewichtsersparnis führen.

Im Ausführungsbeispiel sind die Lamellen, die aufeinandergesetzt das Blechpaket 14 bilden, einstückig ausgebildet. Es ist möglich, das Blechpaket 14 auch aus einzelnen Teilblechpaketen herzustellen, die ihrerseits aus Teillamellen gebildet sind. Diese Teilblechpakete werden in bekannter Weise miteinander zum kompletten Blechpaket 14 zusammengefügt.

Mit einer solchen Ausbildung des Blechpaketes 14 kann im Betrieb des Permanentmagnetsynchronmotors das volle Drehmoment in allen Betriebszuständen erreicht werden. Darüber hinaus kann der Antrieb auch unter Last zuverlässig positioniert werden.

Der Servoantrieb ermöglicht eine sehr hohe Leistungsdichte, die größer ist als die Leistungsdichte von Synchron-Reluktanzmaschinen oder Synchron-Servomotoren mit Positionsencodern. Für den Permanentmagnetsynchronmotor ist weniger Strombedarf erforderlich als für Synchron-Reluktanzmaschinen. Dadurch kann für den Antriebsregler eine kleinere Baugröße herangezogen werden. Da der Positionsencoder und das Encoderkabel wegfallen, können die Kosten für den Servoantrieb erheblich gesenkt werden. Die Energieeffizienz des Servoantriebes entspricht der Energieeffizienz von Synchron-Servomotoren mit Positions-Encoder. Die dynamischen Eigenschaften des Servoantriebes sind besser als andere Servoantriebe ohne Positions-Encoder. Der Strombedarf des Servoantriebes ist zudem gering.

## Patentansprüche

1. Verfahren zur Bestimmung der Position eines Rotors (6, 17, 26) eines Permanentmagnetsynchronmotors bei einem Servoantrieb, bei dem zur Bestimmung der Rotorposition eine feldorientierte Regelung vorgesehen ist, bei der ein Strom-Testsignal (18) injiziert und aus dem sich ergebenden Strom die Rotorposition bestimmt wird, wobei der Permanentmagnetsynchronmotor in Sättigung gebracht wird, anschließend ein definierter Spannung/Stromverlauf der (dem) sich ergebenden Spannung/Strom überlagert wird, die hieraus sich ergebende Änderung der Induktivität (L) erfasst und daraus die Position des Rotors (17) ermittelt wird, wobei der Verlauf (20 bis 23) der Induktivität als Funktion der Rotorlage bei Bestromung des Rotors (17) erfasst und mit gespeicherten Werten verglichen wird, wobei die gespeicherten Werte die Positionsfehler (Δϕ) des Rotors (17) und die zur Kompensation dieses Positionsfehlers erforderlichen Stromwerte enthalten, vorzugsweise in Tabellenform, und zur Korrektur des sättigungsbedingten Positionsfehlers (Δϕ) eine Einrichtung (24) vorgesehen ist, wobei mittels des injizierten Testsignals (8) über den sich einstellenden gemessenen Strom die Lage eines Stromzeigers (19) ermittelt wird, der bei der Sättigungsbestromung berücksichtigt wird, wobei die Einrichtung (24) ein Signal (ϕ*) aussendet, das sich aufgrund des Testsignals (18) ergibt und die augenblickliche Position des Rotors (17) anzeigt sowie den Positionsfehler (Δϕ) kennzeichnet, und die das Statorfeld dem drehenden Rotor (17) nachführt, um den Positionsfehler (Δϕ) zu kompensieren,
**dadurch gekennzeichnet, dass** der Permanentmagnetsynchronmotor stromgeregelt ist, wenn er in Sättigung gebracht wird, und dass der Rotor (17) einmal gegen und einmal in Richtung des Rotormagnetfeldes stromgeregelt in Sättigung gebracht wird.

2. Verfahren nach Anspruch 1,
**dadurch gekennzeichnet, dass** der Positionsfehler (Δϕ) als Verschiebung der Position um die Drehachse des Rotors (17) bestimmt wird.

3. Verfahren nach Anspruch 1 oder 2,
**dadurch gekennzeichnet, dass** das Strom-Testsignal (18) über ein Stellglied (2) zugeführt wird, das vorzugsweise eine Leistungselektronik ist.

## Claims

1. Method for determining the position of a rotor (6, 17, 26) of a permanently magnetic synchronous motor in a servo drive, in which a field-oriented control is provided for determining the rotor position, in which a current test signal (18) is injected and the rotor position is determined from the resulting current, wherein the permanently magnetic synchronous motor is brought to saturation, a defined voltage/current curve is then superimposed on the resulting voltage/current, the resulting change in inductance (L) is detected and from that the position of the rotor (17) is determined, wherein the pattern (20 to 23) of the inductance is determined as a function of the rotor position when the rotor (17) is energized and compared with stored values, wherein the stored values contain the position errors (Δϕ) of the rotor (17) and the current values required to compensate for this position error, preferably in the form of a table, and a device (24) is provided for correcting the saturation-related position error (Δϕ), wherein the position of a current pointer (19), which is taken into account in the saturation current, is determined by means of the injected test signal (8) via the resultant measured current, wherein the device (24) sends out a signal (ϕ*) which results from the test signal (18) and displays the current position of the rotor (17) and identifies the position error (Δϕ), and which tracks the stator field to the rotating rotor (17) in order to compensate for the position error (Δϕ), **characterized in that** the permanently magnetic synchronous motor is currentcontrolled when it is brought to saturation, and **in that** the rotor (17) is brought to saturation in a currentcontrolled manner once against and once in the direction of the rotor magnetic field.

2. Method according to Claim 1, **characterized in that** the position error (Δϕ) is determined as a displacement of the position about the axis of rotation of the rotor (17).

3. Method according to Claim 1 or 2, **characterized in that** the current test signal (18) is supplied via an actuator (2), which is preferably power electronics.

## Revendications

1. Procédé de détermination de la position d'un rotor (6, 17, 26) d'un moteur synchrone à aimant permanent pour un servomoteur, pour lequel une régulation à orientation de champ est prévue pour la détermination de la position de rotor, pour lequel un signal d'essai de courant (18) est injecté et la position de rotor est déterminée à partir du courant en résultant, sachant que le moteur synchrone à aimant permanent est placé en saturation, une allure tension/courant définie est ensuite superposée à la tension/au courant en résultant, la variation d'inductance (L) en résultant est saisie, et la position du rotor (17) est de ce fait déterminée, sachant que l'allure (20 à 23) de l'inductance est saisie en tant que fonction de la position de rotor lors de l'alimentation en courant du rotor (17) et est comparée aux valeurs mémorisées, sachant que les valeurs mémorisées contiennent les erreurs de position (Δφ) du rotor (17) et les valeurs de courant nécessaires à la compensation de cette erreur de position, qu'un système (24) est prévu de préférence sous forme de tableaux et pour la correction de l'erreur de position (Δφ) due à la saturation, sachant qu'au moyen du signal d'essai (8) injecté, la position d'un vecteur de courant (19) est déterminée par le biais du courant mesuré s'instaurant, qui est pris en considération lors de l'alimentation en courant en saturation, sachant que le système (24) émet un signal (φ*), qui résulte en raison du signal d'essai (18) et affiche la position momentanée du rotor (17) et identifie l'erreur de position (Δφ) et qui adapte le champ de stator au rotor en rotation (17) pour compenser l'erreur de position (Δφ), **caractérisé en ce que** le moteur synchrone à aimant permanent est à courant régulé, lorsqu'il est placé en saturation et **en ce que** le rotor (17) est placé en saturation en régulation de courant, une fois en direction du champ magnétique du rotor et une fois à l'opposé de celle-ci.

2. Procédé selon la revendication 1, **caractérisé en ce que** l'erreur de position (Δφ) est déterminée en tant que déplacement de la position autour de l'axe de rotation du rotor (17).

3. Procédé selon la revendication 1 ou 2, **caractérisé en ce que** le signal d'essai de courant (18) est acheminé par un organe de réglage (2), qui est de préférence un système électronique de puissance.
